# EUROPEAN PATENT SPECIFICATION

(11) **EP 2 935 045 B1**
(45) Date of publication and mention of the grant of the patent: **21.11.2018**
(21) Application number: 13818441.1
(22) Date of filing: 05.12.2013
(51) Int. Cl.: B65D 65/46, B65D 85/804, B29C 45/00

(54) **CARTRIDGE FOR PREPARING A LIQUID PRODUCT, AND PROCESS FOR PRODUCTION THEREOF**
KARTUSCHE ZUR HERSTELLUNG EINES FLÜSSIGEN PRODUKTS UND VERFAHREN ZUR HERSTELLUNG DAVON
CARTOUCHE DE PRÉPARATION D'UN PRODUIT LIQUIDE ET SON PROCÉDÉ DE PRODUCTION

(30) Priority: 21.12.2012 IT TO20121125
(43) Date of publication of application: 28.10.2015
(73) Proprietor: Luigi Lavazza S.p.A., 10152 Torino (IT)
(72) Inventor: CABILLI, Alberto, I-10152 Torino (IT)
(74) Representative: Bosotti, Luciano
(86) International application number: PCT/IB2013/060665
(87) International publication number: WO 2014/097039

(56) References cited:
- EP-A1- 1 992 575
- EP-A1- 2 196 407
- EP-A1- 2 465 793
- EP-A2- 1 961 676
- WO-A1-2012/168764
- WO-A2-2009/050570

## Description

### Technical field

The present description relates to cartridges for the preparation of liquid products.

Various embodiments may regard cartridges for the preparation of beverages, for example coffee.

### Technological background

Cartridges (also referred to as "capsules") for the preparation of a liquid product, such as for example a beverage, via introduction into the cartridge of liquid (possibly under pressure and/or at high temperature) and/or vapour constitute an extremely rich and articulated technological sector, as documented, for example, by FR-A-757 358, FR-A-2 373 999 (corresponding to US-A-4 136 202), FR-A-2 556 323, GB-A-938 617, GB-A-2 023 086, CH-A-406 561, US-A-3 403 617, US-A-3 470 812, US-A-3 607 297 (corresponding to FR-A-1 537 031), WO-A-86/02 537, EP-A-0 199 953, EP-A-0 211 511, EP-A-0 242 556, EP-A-0 468 078, EP-A-0 469 162, EP-A-0 507 905, WO 2010/106516 A1, and EP-A-2 218 653.

A fair number of the solutions described in the documents cited relates primarily to the preparation of liquid products constituted by beverages such as coffee, tea, chocolate, broth, soups, or various infusions.

As regards the preparation of coffee, there are known (for example, from EP-A-0 507 905, already cited previously and taken as model for the preamble of originally filed Claim 1) solutions aimed at enabling preparation of espresso coffee.

There are likewise known and widely used solutions in which the consumer purchases a machine (e.g., a coffee machine) and subsequently purchases cartridges specifically designed and produced to function in combination with that particular machine.

In this way, some salient characteristics of the cartridge/machine system are defined for the consumer at the moment of purchase and can no longer be modified, such as:
- the external shape of the cartridge or capsule for its introduction into the machine;
- the configuration of the infusion chamber that contains the cartridge during the process of extraction of the liquid product such as the beverage;
- the modalities of interaction of the material constituting the cartridge with the infusion chamber;
- the modalities of extraction of the beverage;
- the modalities of introduction of the cartridge at the start of delivery; and/or
- the modalities of expulsion of the cartridge at the end of delivery.

For example, said document No. EP-A-0 507 905 describes a cartridge that is to be perforated by filtering tips as a result of the pressure of the liquid and/or vapour introduced into the cartridge.

A solution of this type can be used, for example, for providing cartridges or capsules of a perforable type, in which:
- the top sealing foil of the cartridge (where hot water and/or vapour enter) is perforated mechanically by the delivery assembly via a first set of perforating tips; and
- the bottom of the cartridge itself (where the beverage exits) undergoes deformation as a result of the pressure of the liquid/vapour introduced into the cartridge so that it can be perforated by a second set of hollow tips (roughly resembling hypodermic needles) that have filtering characteristics.

Solutions of this sort are particularly suitable for dispensing beverages such as espresso coffee. The perforation of the bottom as a result of the pressure can in fact concur in determining the correct rate of flow of hot water under pressure (typically in the range of 3-9 bar according to the products).

This technology can, however, prove limiting in relation to the range of products that can be obtained with a certain cartridge/machine combination in so far as it may exclude, for instance, beverages that require a pressure of extraction equal to zero (ambient pressure), such as for example the so-called "filter coffee" obtained traditionally by simple gravimetric percolation.

Documents such as EP 1 295 554 A1, WO 2006/005736 A2 or EP 1 886 942 A1 identify specific solutions regarding filtering tips, the mechanism of opening/closing/perforation by the perforating tips, and the type of cartridge, with corresponding system.

In current practice, it may be envisaged that the side wall and the bottom wall of the cartridge are made of plastic material, such as for example polypropylene co-extruded in lamination with ethylene vinyl alcohol (EVOH), shaped by thermoforming.

A composite material of this nature cannot, however, be classified as compostable material.

The characteristics that a material must possess to be defined as compostable, according to a commonly accepted definition also at the patent level (see, for example, EP-B-0 497 838, EP-B-0 561 982, EP-B-0 788 733, EP-B-0 723 572, EP-B-0 868 275, EP-B-0 971 818 and EP-B-1 842 944) are established, for example, by the European norm EN 13432 "Requirements for packaging recoverable through composting and biodegradation - Test scheme and evaluation criteria for the final acceptance of packaging", adopted in Italy as UNI EN 13432.

According to the above standard, the characteristics that a compostable material must present are the ones listed hereinafter.
- Biodegradability, i.e., the metabolic conversion of the compostable material into carbon dioxide. This property is measured with a standard testing method, namely prEN 14046 (also published as ISO 14855: biodegradability under controlled composting conditions). The level of acceptance is 90% biodegradability (with respect to cellulose) to be achieved in less than 6 months.
- Disintegrability, i.e., the fragmentation and loss of visibility in the final compost (absence of visual contamination). Measured with a composting test on a pilot scale (prEN 14045). Samples of the test material are composted together with organic waste for 3 months. At the end, the compost is sifted with a 2-mm sieve. The mass of residue of the test material with a size greater than 2 mm must be less than 10% of the initial mass.
- Absence of adverse effects on the composting process, verified with a composting test on a pilot scale.
- Low levels of heavy metals (below predefined maximum values) and absence of adverse effects on the quality of the compost (e.g., reduction of the agronomic value and presence of ecotoxicological effects on the growth of plants). A plant-growth test (test OECD 208, modified) is carried out on samples of compost where degradation of the test material has occurred. No difference must be found as compared to a control compost.
- Other chemico-physical parameters that must not change after degradation of the material being studied: pH; saline content; volatile solids; N; P; Mg; K.

It will be appreciated that a biodegradable material is not necessarily compostable because it must also disintegrate during a composting cycle. On the other hand, a material that breaks up during a composting cycle into microscopic pieces that are not then, however, totally biodegradable is not compostable.

UNI EN 13432 is a harmonized norm; i.e., it has been published in the Official Journal of the European Union and is adopted in Europe at a national level and envisages presumption of compliance with the European Directive No. 94/62 EC, on packaging and packaging waste.

Following upon the increasing interest in the environment and in the end of life of everyday foodstuff waste, compostability is a requirement that is deemed increasingly important by consumers of the cartridges considered herein.

In this regard, it has been noted that there may be envisaged the solution of resorting, in order to produce the casing of such cartridges, to a compostable material (i.e., according to a term sometimes used in the sector, a "biomaterial"), such as for example: polymers extracted from biomass (e.g., polysaccharides such as starch - Mater-Bi® - cellulose, lipids, proteins); synthetic polymers (e.g., polylactic acid - PLA - derived from the fermentation of starch); polymers produced by micro-organisms or genetically modified bacteria (e.g., polyhydroxyalckanoates - PHAs); and polymers from fossil monomers (e.g., polybutylsuccinate - PBS). There may be numbered in this category also mixtures of the above (the so-called "compounds") with or without the introduction of additives, such as nanoparticles (e.g., talc, Cloesite).

It has been noted that these biomaterials, in combination with coffee machines provided with perforating tips, can present a high elongation at yield, such as to render the operations of perforation far from effective, for example in so far as the material assumes the form of a stocking around the perforating tips instead of tearing, giving rise to possible drawbacks in delivery.

WO 2010/106516 A1 describes a type of cartridge such as to combine a filter paper and a biopolymer, the filter paper being positioned on the side of the outlet for the beverage (coffee).

This type of cartridge may prove unusable in coffee machines provided with perforating tips. In fact, the bottom, which is pre-perforated (hence already pervious), has a plane shape that may prove unsuitable for use together with particular types of filtering tips, which may alternatively:
- pierce first the biopolymer part and then the paper with the risk that, for example, the ground coffee under pressure used for preparing the beverage may be entrained with the beverage as far as the item (cup) that is to receive the dispensed liquid; or
- assume the form of a stocking, inhibiting delivery.

Allied to the above is the possible risk that the tips, if subjected to repeated cycles of this nature, might break.

Again, WO 2012/077066 A1 describes a cartridge in which perforation is facilitated by the combination of a biodegradable/compostable polymer with material such as paper: it has on the other hand been noted that, in particular conditions of use, the paper contained in the cartridge may be soaked with water/beverage, thus undergoing softening such as to render problematical its expulsion from the machine in which it is used.

For completeness of exposition reference may again be made to WO 2010/137952 A1, where a cartridge or capsule is described configured for functioning in a machine (originally designed to function with a cartridge of a different type) provided with tips that are to tear the cartridge upon mechanical closing of the assembly to enable inlet of the water into the cartridge through the tears made. The cartridge according to the solution described in WO 2010/137952 A1 (which moreover does not mention the possible use of biomaterials) is configured so as not to interact with the perforating tips of the machine in so far as the tips in question do not touch the bottom of the cartridge itself.

Documents such as EP 1 992 575 A1 and WO2009/050570 A2 are further exemplary of the prior art. EP 1 992 575 A1 discloses a cartridge with a filling of at least one substance for preparing a liquid product by means of liquid and/or steam introduced into the cartridge, the cartridge including a casing containing said filling with a bottom wall for said liquid product to flow from the cartridge,and that said bottom wall presents, when observed on the outer side with respect to the cartridge:
- a central portion
- a first annular cavity that surrounds the central portion
- an intermediate annular portion that surrounds the first annular cavity and is separated therefrom by a first annular rib.

### Object and summary

The object of various embodiments of the present invention is to overcome at least some of the limitations referred to above.

This may apply, for example, to the limitations regarding the range of beverages originally obtainable from a cartridge used in a machine characterized by having a system of perforation of the bottom as a result of the internal pressure and/or to the improvement of end-of-life of the cartridges following upon the extraction process.

Various embodiments enable the above object to be achieved thanks to a cartridge having the characteristics recalled in the ensuing claims.

Various embodiments may also regard a process for producing such a cartridge.

The claims form an integral part of the technical teaching provided herein in relation to the invention.

Various embodiments enable provision of a cartridge (or capsule) capable of affording individually or in combination one or more of the following advantages:
- possibility of providing the casing of the cartridge (and possibly, even just the bottom and/or the cartridge as a whole, including the sealing foil) made of compostable material without giving rise to the functional drawbacks outlined previously;
- possibility of use in machines provided with perforating tips that are to perforate the bottom wall of the cartridge without the bottom wall being perforated by the tips, it being, instead, supported by the tips during the process of extraction of the liquid product; and/or
- possibility of use of the cartridge for extraction at ambient pressure, for example for the preparation of so-called "filter coffee", i.e., coffee without the creamy film.

Various embodiments enable provision of a biodegradable/compostable cartridge that is able to function in machines already present on the market that are provided with perforating (and possibly filtering) tips, enabling the tips to interact with the bottom of the cartridge, without, however, perforating it, but performing, instead, an action of support of the bottom of the cartridge (e.g., via a mechanical fit, such as a male/female fit in purposely provided containing saddle-shaped portions).

In various embodiments, the bottom of the cartridge enables proper execution of delivery of espresso coffee under pressure (3 - 9 bar according to the type of product) without the casing of the cartridge undergoing damage, thus preventing any undesirable release of ground coffee that may be entrained by the beverage into the container (cup) for its consumption with consequent negative perception on the part of the consumer.

In various embodiments, the cartridge may be suited to the preparation of filter coffee. This particular configuration of liquid product is characterized by the practically total absence of the creamy film on the surface of the beverage contained in cup. A product of this kind can be obtained traditionally via extraction by mere percolation, i.e., traversal of the bed of ground coffee by gravity and hence at ambient pressure. The adoption of a system in which the cartridge is perforated as a result of the pressure may consequently prove incompatible with the preparation of the above beverage. Since various embodiments are not based upon this principle, they can offer a greater flexibility and a product range that is as a whole wider given the same coffee machine that the consumer already has at his disposal.

### Brief description of the drawings

Various embodiments will now be described, purely by way of non-limiting example, with reference to the annexed drawings, in which:
- Figure 1 is a general perspective view of a cartridge according to embodiments;
- Figure 2 illustrates the cartridge of Figure 1 with a sealing foil removed;
- Figure 3 is a perspective view from beneath of embodiments;
- Figure 4 corresponds to a cross section according to the line IV-IV of Figure 3, reproduced at an enlarged scale;
- Figure 5 is a perspective view from beneath of embodiments;
- Figure 6 corresponds to a cross section according to the line VI-VI of Figure 5, reproduced at an enlarged scale; and
- Figure 7 illustrates, at a further enlarged scale, the portion of Figure 6 indicated by the arrow VII.

### Detailed description

In the ensuing description, various specific details are illustrated aimed at an in-depth understanding of various examples of embodiment. The embodiments may be obtained without one or more of the specific details, or with other methods, components, materials, etc. In other cases, known structures, materials, or operations are not illustrated or described in detail so that various aspects of the embodiments will not be obscured. Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may possibly be present in various points of the present description do not necessarily refer to one and the same embodiment. Furthermore, particular conformations, structures, or characteristics may be combined in any adequate way in one or more embodiments.

The references used herein are provided only for the convenience of the reader and hence do not define the sphere of protection or the scope of the embodiments.

In the figures, the reference number 10 designates as a whole a cartridge (or capsule, said terms being used here as equivalent) for preparing a liquid product via introduction into the cartridge of liquid and/or vapour.

In various embodiments, the liquid product in question may be constituted by a beverage such as, for example, coffee (for instance, espresso coffee or filter coffee) obtained by introducing into the cartridge liquid and/or vapour under pressure and at high temperature.

In any case, repeated reference, in the framework of the present detailed description, to the preparation of coffee should not be understood in a sense in any way limiting the scope of the description, which is altogether general.

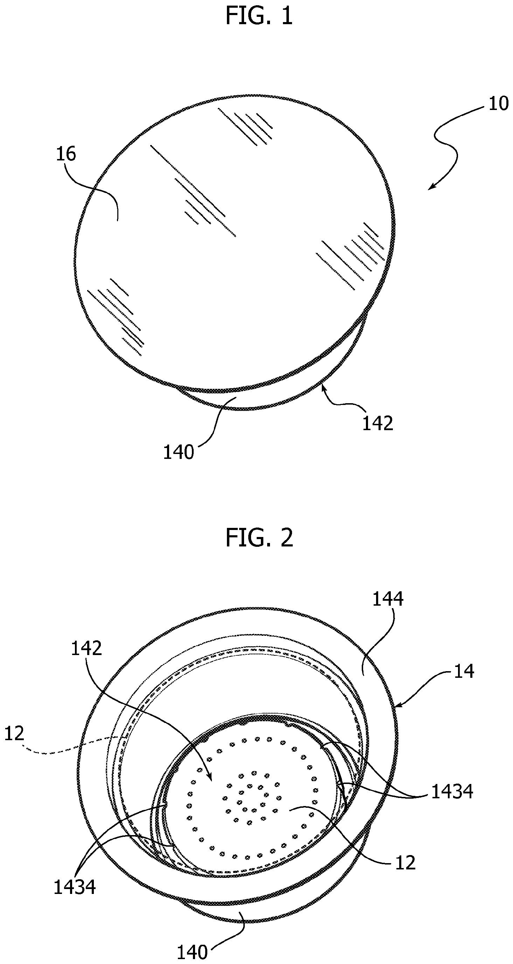

In various embodiments, the cartridge 10 can contain a dose 12 of a substance that is to form the liquid product via the aforesaid liquid and/or vapour. For simplicity of representation, the dose of substance 12 is represented schematically with a dashed line only in Figure 2.

In various embodiments, the dose 12 may be constituted by ground coffee, or by another precursor of a liquid product, such as for example a beverage like tea, powdered or granulated chocolate, products for the preparation of broths, soups, drinks, and infusions of various nature: this list is to be understood as provided purely by way of non-limiting example.

In various embodiments, in the structure of the cartridge 10, which may be shaped like a tray or small cup within which the dose 12 is located, it is possible to distinguish:
- a casing 14, comprising a side wall or sleeve 140 and a bottom wall 142 that closes the casing 14 at one end of the mantle wall 140; and
- a sealing foil 16 (removed in Figure 2), for example of a peelable type, which closes the cartridge 10 at the end opposite to the bottom wall 142.

The sealing foil 16 is suited to being connected in a fluid-tight way, for example by heat sealing, to the side wall 140 of the casing 14 of the cartridge, for example around a flange 144 that surrounds the mouth part of the casing 14.

In various embodiments, as represented in the annexed figures, the casing 14 may present a tray-like shape diverging from the bottom wall 142 towards the end closed by the sealing foil 16. In various embodiments, the diverging conformation may be frustoconical. This conformation is not on the other hand imperative in so far as the cartridge 14 may present as a whole different shapes, for example prismatic, frustopyramidal, square, etc.

Various embodiments may regard the fact that the bottom 142 may present a sculptured structure, i.e., with parts in relief and parts set in.

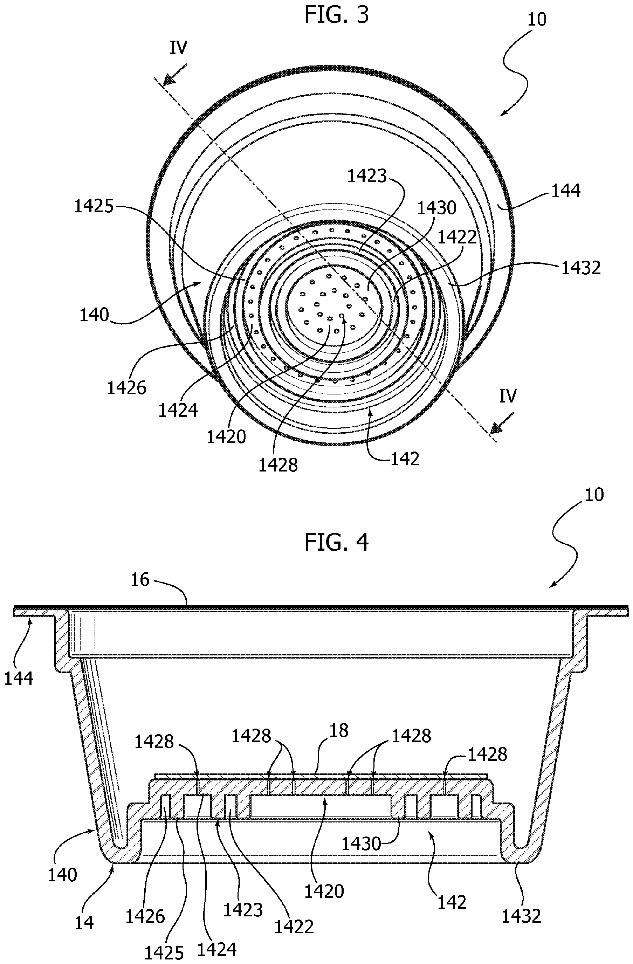

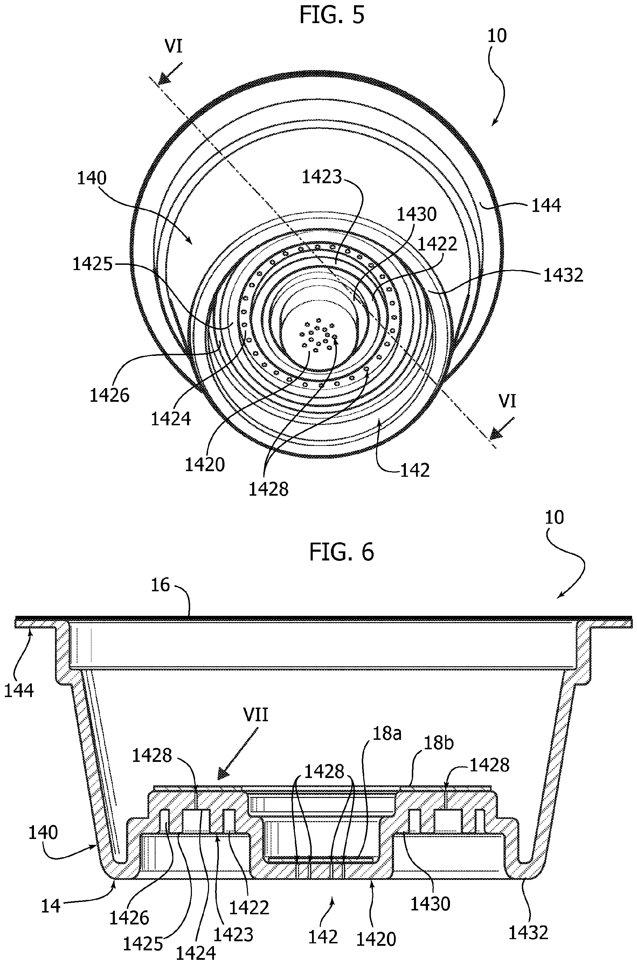

In various embodiments (with possible differences that may be appreciated from the comparison between Figures 3 and 4, on the one hand, and Figures 5 and 6, on the other hand) the above sculptured structure means that, viewed from outside the cartridge (i.e., according to the point of observation of Figures 3 and 5), the bottom wall 142 may present:
- a central portion 1420 that may be either set in, i.e., recessed (see Figures 3 and 4) or protruding, i.e., in relief (see Figures 5 and 6);
- a first annular groove 1422 (i.e., a first set-in annular portion) that surrounds the central portion 1420;
- an intermediate annular portion 1424 that surrounds the first annular groove 1422 and is separated from the latter by a first annular rib 1423; and
- a second annular groove 1426 (i.e., a second annular set-in portion) that surrounds the intermediate portion 1424 and is separated from the latter by a second annular rib 1425.

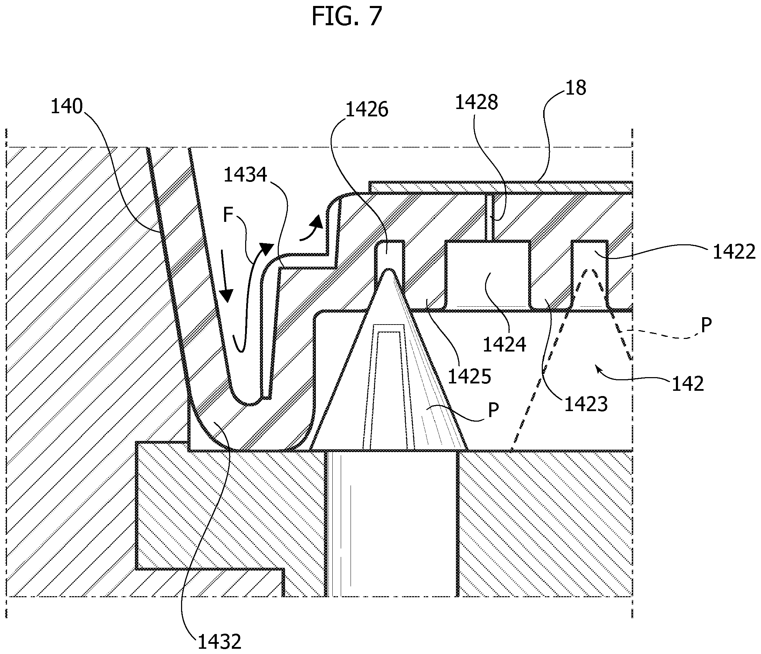

The aforesaid sequence of grooves and ribs is more clearly visible in the sectioned view of Figure 7, which in itself may apply to both of the embodiments, namely, the one represented in Figures 3 and 4 and the one represented in Figures 5 and 6.

In various embodiments, the bottom part 142 may present openings 1428 for enabling exit of the liquid product (e.g., a beverage, such as coffee) formed in the cartridge 10.

In various embodiments, the openings 1428 for exit of the liquid product from the cartridge 10 may be localized in at least one from among:
- the central portion 1420;
- the first annular cavity 1422;
- the intermediate annular portion 1424; and/or
- the second annular cavity 1426;
and optionally in more than one of the above portions/cavities.

In various embodiments, it is possible to envisage that the openings 1428 for exit of the liquid product from the cartridge 10 are located in the (or also in the) ribs that separate the aforesaid portions/cavities.

In various embodiments, at least one between (and preferably both, as illustrated in the figures) the central portion 1420 and the intermediate portion 1424 are provided with openings 1428 for outflow of the liquid product prepared in the cartridge 10.

In various embodiments, as exemplified in the annexed figures, where the casing 14 of the cartridge 10 has a frustoconical conformation, the aforesaid annular portions 1422, 1424 and 1426, as well as the ribs 1423, 1425, which extend so as to separate the annular portions, may have a circular shape; this shape is not on the other hand imperative and may be modified according to the overall shape of the cartridge 10.

Similar considerations may apply to a further rib, designated by 1430, which can extend between the central portion 1420 and the first groove 1422, whether the central portion 1420 be set in (i.e., recessed, as shown in Figures 3 and 4) or project (i.e., be in relief, as shown in Figures 5 and 6), the terms "recessed" and "in relief" always referring to the bottom wall 142 as viewed from outside the cartridge 10.

In various embodiments, as exemplified in Figures 3 and 4, with the central portion 1420 set in, the bottom wall 142 can present, as viewed from inside the cartridge 10, an overall planar surface (more readily appreciable in the cross-sectional view of Figure 4) at least in the area of the aforesaid central portion 1420 and of the various set-in parts 1422, 1424 and 1426.

This consequently makes it possible to apply on this planar surface a foil (e.g., a disk), of filtering material 18, such as for example filter paper, which is designed to prevent the undesirable exit of substance of the dose 12 (for example, ground coffee) on the outside of the cartridge 10.

In various embodiments, the holes 1428 can be obtained in the form of pervious through holes; preservation of the aroma and, in general, of the organoleptic qualities of the substance of the dose 12 prior to use can thus be obtained by inserting the cartridge 10 in a sealed sachet (for example, of the flow-pack type) that can be opened by the user to take out the cartridge 10 for use.

In various embodiments, as exemplified in Figures 5 and 6, the central portion 1420 may project (once again viewing the bottom wall 142 from outside the cartridge 10).

The filter element 18 can in this case comprise:
- a central disk 18a applied in an area corresponding to the openings 1428 provided in the central portion 1420; and/or
- a ring 18b applied to cover the openings 1428 provided in the intermediate portion 1424.

Whatever the solution adopted, in various embodiments the filtering foil 18 or 18a, 18b can be applied on the inside of the bottom wall 142 of the cartridge 10.

In the embodiments exemplified in Figures 5 and 6 - thanks to the fact that the central portion 1420 of the bottom wall 142 projects towards the outside of the cartridge 10 - within the cartridge 10 there may be formed, in the region of the central portion 1420, a central bowl-shaped chamber that is able to receive a certain amount of the substance of the dose 12: the comparison between the cross-sectional views of Figure 4 and of Figure 6 exemplifies precisely the presence, at the centre of Figure 6, of said additional reception chamber.

Both of the embodiments exemplified in Figures 3, 4 and 5, 6 may on the other hand envisage the presence, along the contour of the bottom wall 142, of a projecting peripheral rib 1432 that can form, within the cartridge 10, a further annular chamber for receiving the substance of the dose 12.

As may be more clearly appreciated in the enlarged cross-sectional view of Figure 7, in the region of the peripheral rib 1432, in the internal space of the cartridge 10 there is thus formed an annular chamber for receiving the substance of the dose 12. In various embodiments, on the inner side of the rib 1432, hence in an area corresponding to the internal periphery of the aforesaid annular chamber for receiving the substance of the dose 12, channels 1434 may be provided that extend in an approximately axial/radial direction with respect to the development of the cartridge 10 in order to favour flow of the liquid for preparation of the beverage. This flow aimed at reaching the annular peripheral chamber (represented schematically by the arrows F of Figure 7) prevents the portion of substance of the dose 12 contained in the peripheral chamber itself from possibly being to a certain extent excluded from the flow thus contributing only partially to the preparation of the liquid product.

The same Figure 7 highlights the fact that, in various embodiments, the annular cavities (e.g., 1422 and 1426) provided in the outside in the bottom wall 142 of the cartridge 10 can receive the tips P present in certain machines for preparing beverages in order to perforate the bottom wall of the cartridges and cause exit of the liquid product being prepared.

In various embodiments as illustrated herein, cavities such as the cavities 1422 and 1426 can form annular seats which are able to set themselves, so to speak, "straddling" the vertex parts of the tips P. In this way, the tips P do not perforate the bottom wall 142 and form, instead, therewith a sort of fit, if need be, an interference fit, such as to cause the tips P to function as supporting formations that are able to support the bottom wall 142 of the cartridge 10 by countering onset of certain negative phenomena possibly linked to the choice of making the casing 14 of the cartridge 10 with a biomaterial such as the ones mentioned in the introductory part of the present description.

In this regard, it will be appreciated that also the sealing foil 16 may be produced using such a material, giving rise to a cartridge 10 completely made of compostable material.

Even though this solution is not exemplified explicitly in the annexed figures, holes such as the holes 1428 could be provided also in an area corresponding to the cavities 1422 and 1426. The outflow of the liquid product starting from these possible holes would not in fact be hindered by the tips P, which support the bottom wall 142 without perforating it.

In various embodiments, the choice of compostable materials that can be used for producing the bottom wall 142 (and preferentially the casing 14 of the cartridge as a whole, as well as possibly the sealing foil 16) can extend to:
- polylactic acid (PLA);
- poly-L-lactide (PLLA);
- poly-D-lactide (PDLA);
- stereocomplex blend of PDLA and PLLA;
- maize starches;
- cellulose materials;
- PLA-, PDLA- and/or PLLA-based formulations in combination with mineral fillers;
- PLA-, PDLA- and/or PLLA-based formulations in combination with mineral fillers and plasticizers;
- PLA-, PDLA- and/or PLLA-based formulations and cellulose;
- formulations with a base of maize starches in combination with mineral fillers;
- polybutylene succinate;
- polybutylene succinate in combination with mineral fillers;
- polymers produced by micro-organisms or bacteria such as PHAs (poly-hydroxy-alkanoates) and PHB (poly-beta-hydroxybutyrates);
- materials resulting from the combination of vegetable fibres and starches;
- materials resulting from the combination of vegetable biomasses and starches;
- materials resulting from the combination of vegetable fibres and PLA;
- materials resulting from the combination of vegetable biomasses and PLA; and
- combinations of the foregoing.

Various embodiments can take into account aspects linked to the compostability of the above materials, for example as regards the maximum thickness of the parts making up the cartridge 10, for example the bottom wall 142.

Tests conducted by the present applicant would suggest for the thickness of the bottom wall 142 in the bottom portion 1420 values of between 0.7 and 2.5 mm.

Similar considerations would suggest that the height of the peripheral rib 1432, referred to the common plane of mouth of the cavities 1422, 1424 and 1426 may have a value (for example, in the region of 2.5 mm) not less than twice the depth of the cavities (which may be in the region of 1 mm).

The width of cavities such as the cavities 1422 and 1426 (measured in a radial direction with respect to the casing 14 of the cartridge 10) may be comprised between 0.5 and 1.2 mm, i.e., with an aspect ratio of the cross sections of the cavities 1422 and 1426 of between approximately 1:1 and 2:1.

A casing of a cartridge 10 having the characteristics of the casing 14 exemplified in the figures may be obtained, in various embodiments, with a moulding process divided into two substeps:
- filling the mould cavity; and
- keeping the material in the closed mould kept at a temperature higher than room temperature.

In various embodiments, a cartridge casing 10 having the characteristics of the casing 14 exemplified in the figures may be obtained with a process of injection moulding, which is also divided into two substeps:
- injection moulding proper; and
- post-treatment that can be carried out with two alternative modalities:
   - baking in an oven; and
   - UV treatment.

In various embodiments, the casing 14 of a cartridge 10 as exemplified herein, may be produced via a process of injection-compression and/or forging comprising the following steps:
- creation of a preform in the semi-molten state, e.g., with one of the biomaterials exemplified previously;
- deposition of the preform within a cavity having the shape that it is intended to bestow upon the casing 14 of the cartridge 10;
- forging of the preform within a cavity having the shape of the casing 14 of the cartridge 10 using a mechanical punch; and
- post-treatment in turn executed according to three alternative modalities:
   - keeping the casing in a closed mould at a temperature higher than room temperature;
   - baking it in an oven at a temperature higher than room temperature; and
   - treating it with UV radiation.

## Claims

1. A cartridge (10) with a filling (12) of at least one substance for preparing a liquid product by means of liquid and/or steam introduced into the cartridge (10), the cartridge including a casing (14) containing said filling (12) with a bottom wall (142) for said liquid product to flow from the cartridge (10), wherein said bottom wall (142) presents, when observed on the outer side with respect to the cartridge (10):
- a central portion (1420),
- a first annular cavity (1422) that surrounds the central portion (1420),
- an intermediate annular portion (1424) that surrounds the first annular cavity (1422) and is separated therefrom by a first annular rib (1423),
- a second annular cavity (1426) that surrounds the intermediate annular portion (1424) and is separated therefrom by a second annular rib (1425),
and wherein said bottom wall (142) has outflow openings (1428) for said liquid product from the cartridge (10).

2. The cartridge of claim 1, wherein said outflow openings (1428) for said liquid product from the cartridge (10) are located in at least one of said central portion (1420), said first (1422) and second (1426) annular cavity and said intermediate annular portion (1424), preferably in at least one of said central portion (1420) and said intermediate portion (1424).

3. The cartridge of claim 1 or claim 2, including a foil of filter material (18) applied on the bottom wall (142) of the cartridge (10) at said outflow openings (1428) for the liquid, said filter material being preferably applied on the inner side of the bottom wall (142) with respect to the cartridge (10).

4. The cartridge of any of claims 1 to 3, wherein said central portion (1420) is separated from the first annular cavity (1422) by a third annular rib (1430).

5. The cartridge of any of the preceding claims, wherein said central portion (1420), when observed on the side of the bottom wall (142) external with respect to the cartridge (10), is recessed.

6. The cartridge of any of the preceding claims 1 to 4, wherein said central portion (1420), when observed on the side of the bottom wall (142) external with respect to the cartridge (10), is a protrusion and forms within the cartridge (10) a respective receiving chamber for said at least one substance (12).

7. The cartridge of any of the preceding claims, wherein said bottom wall (142) presents a peripheral projecting rib (1432) forming, within the cartridge (10), an annular receiving chamber for said at least one substance (12).

8. The cartridge of claim 7, including flow channels (1434) for said liquid product provided on the inner surface of the bottom wall (142) with respect to the cartridge (10) at a radially internal position with respect to said annular receiving chamber.

9. The cartridge of any of the preceding claims, wherein the casing (14) of the cartridge (10) and, preferably, a sealing foil (16) to seal the casing of the cartridge (10) at the end of the casing opposite said bottom wall (142), include a compostable material.

10. The cartridge of claim 9, wherein said compostable material is selected out of:
- polylactic acid (PLA),
- poly-L-lactide (PLLA),
- poly-D-lactide (PDLA),
- stereocomplex blend of PDLA and PLLA,
- corn starches,
- cellulosic materials,
- formulations based on PLA, PDLA and/or PLLA in combination with mineral fillers,
- formulations based on PLA, PDLA and/or PLLA in combination with mineral fillers and plasticizers,
- formulations based on PLA, PDLA and/or PLLA and cellulose,
- formulations based on corn starches in combination with mineral fillers,
- polybutylene succinate,
- polybutylene succinate in combination with mineral fillers,
- polymers produced by microorganisms or bacteria such as PHA (poly-idroxy-alcanoates) and PHB (poly-idroxy-butyrate),
- materials resulting from the combination of plant fibers and starches,
- materials resulting from the combination of plant biomasses and starches,
- materials resulting from the combination of plant fibers and PLA,
- materials resulting from the combination of plant biomasses and PLA, and
- combinations of the above.

11. The cartridge of any of the preceding claims, including a sealing foil (16) to seal the casing of the cartridge (10) at the end of the casing opposite said bottom wall (142), wherein the sealing foil (16) is of a pealable type.

12. A process for producing the casing (14) of a cartridge (10) according to any of the preceding claims, said method including:
- a first step of forming said casing (14), and
- a second post-treatment step including one or more of:
- i) maintaining in a closed mould,
- ii) oven baking, and/or
- iii) UV treatment.

13. The process of claim 12, wherein said first step of forming said body (14) is selected out of:
- i) moulding in a moulding cavity,
- ii) injection moulding, and
- iii) punch-forging a tablet in a semi-molten state.

## Patentansprüche

1. Kartusche (10) mit einer Füllung (12) mindestens einer Substanz zur Herstellung eines flüssigen Produkts mittels Flüssigkeit und/oder Dampf, die in die Kartusche (10) eingebracht werden, wobei die Kartusche ein Gehäuse (14), das die Füllung (12) enthält, mit einer Bodenwand (142) aufweist, damit das flüssige Produkt aus der Kartusche (10) fließt, wobei die Bodenwand (142), gesehen von der Außenseite in Bezug auf die Kartusche (10), aufweist:
- einen zentralen Abschnitt (1420),
- einen ersten ringförmigen Hohlraum (1422), der den zentralen Abschnitt (1420) umgibt,
- einen dazwischenliegenden ringförmigen Abschnitt (1424), der den ersten ringförmigen Hohlraum (1422) umgibt und durch eine erste ringförmige Rippe (1423) von diesem getrennt ist,
- einen zweiten ringförmigen Hohlraum (1426), der den dazwischenliegenden ringförmigen Abschnitt (1424) umgibt und durch eine zweite ringförmige Rippe (1425) von diesem getrennt ist,
und wobei die Bodenwand (142) Ausflussöffnungen (1428) für das flüssige Produkt aus der Kartusche (10) aufweist.

2. Kartusche nach Anspruch 1, wobei die Ausflussöffnungen (1428) für das flüssige Produkt aus der Kartusche (10) in mindestens einem von dem zentralen Abschnitt (1420), dem ersten (1422) und dem zweiten (1426) ringförmigen Hohlraum und dem dazwischenliegenden ringförmigen Abschnitt (1424) angeordnet sind, vorzugsweise in mindestens einem von dem zentralen Abschnitt (1420) und dem dazwischenliegenden Abschnitt (1424).

3. Kartusche nach Anspruch 1 oder Anspruch 2, umfassend eine Folie aus Filtermaterial (18), die auf der Bodenwand (142) der Kartusche (10) an den Ausflussöffnungen (1428) für die Flüssigkeit aufgebracht ist, wobei das Filtermaterial vorzugsweise auf der Innenseite der Bodenwand (142) in Bezug auf die Kartusche (10) aufgebracht ist.

4. Kartusche nach einem der Ansprüche 1 bis 3, wobei der zentrale Abschnitt (1420) von dem ersten ringförmigen Hohlraum (1422) durch eine dritte ringförmige Rippe (1430) getrennt ist.

5. Kartusche nach einem der vorhergehenden Ansprüche, wobei der zentrale Abschnitt (1420), gesehen von der Seite der Bodenwand (142) extern in Bezug auf die Kartusche (10), vertieft ist.

6. Kartusche nach einem der vorhergehenden Ansprüche 1 bis 4, wobei der zentrale Abschnitt (1420), gesehen von der Seite der Bodenwand (142) extern in Bezug auf die Kartusche (10), ein Vorsprung ist und innerhalb der Kartusche (10) eine jeweilige Aufnahmekammer für die mindestens eine Substanz (12) bildet.

7. Kartusche nach einem der vorhergehenden Ansprüche, wobei die Bodenwand (142) eine periphere vorstehende Rippe (1432) aufweist, die, innerhalb der Kartusche (10), eine ringförmige Aufnahmekammer für die mindestens eine Substanz (12) bildet.

8. Kartusche nach Anspruch 7, umfassend Strömungskanäle (1434) für das flüssige Produkt, die an der Innenfläche der Bodenwand (142) in Bezug auf die Kartusche (10) in einer radial inneren Position in Bezug auf die ringförmige Aufnahmekammer bereitgestellt sind.

9. Kartusche nach einem der vorhergehenden Ansprüche, wobei das Gehäuse (14) der Kartusche (10) und vorzugsweise eine Abdichtfolie (16), um das Gehäuse der Kartusche (10) am Ende des Gehäuses gegenüber der Bodenwand (142) abzudichten, ein kompostierbares Material aufweisen.

10. Kartusche nach Anspruch 9, wobei das kompostierbare Material ausgewählt ist aus:
- Polymilchsäure (PLA),
- Poly-L-Iactid (PLLA),
- Poly-D-Iactid (PDLA),
- Stereokomplex-Mischung von PDLA und PLLA,
- Maisstärken,
- Cellulosematerialien,
- Formulierungen auf der Basis von PLA, PDLA und/oder PLLA in Kombination mit Mineralfüllstoffen,
- Formulierungen auf der Basis von PLA, PDLA und/oder PLLA in Kombination mit Mineralfüllstoffen und Weichmachern,
- Formulierungen auf der Basis von PLA, PDLA und/oder PLLA und Cellulose,
- Formulierungen auf der Basis von Maisstärken in Kombination mit Mineralfüllstoffen,
- Polybutylensuccinat,
- Polybutylensuccinat in Kombination mit Mineralfüllstoffen,
- Polymeren, hergestellt durch Mikroorganismen oder Bakterien, wie PHA (Polyhydroxyalkanoaten) und PHB (Polyhydroxybutyrat),
- Materialien, erhalten aus der Kombination von Pflanzenfasern und Stärken,
- Materialien, erhalten aus der Kombination von Pflanzenbiomassen und Stärken,
- Materialien, erhalten aus der Kombination von Pflanzenfasern und PLA,
- Materialien, erhalten aus der Kombination von Pflanzenbiomassen und PLA, und
- Kombinationen der obigen.

11. Kartusche nach einem der vorhergehenden Ansprüche, umfassend eine Abdichtfolie (16), um das Gehäuse der Kartusche (10) am Ende des Gehäuses gegenüber der Bodenwand (142) abzudichten, wobei die Abdichtfolie (16) von einem abschälbaren Typ ist.

12. Verfahren zur Herstellung eines Gehäuses (14) einer Kartusche (10) nach einem der vorhergehenden Ansprüche, wobei das Verfahren umfasst:
- einen ersten Schritt des Bildens des Gehäuses (14), und
- einen zweiten Nachbehandlungsschritt, der eines oder mehrere umfasst von:
i) Halten in einer geschlossenen Form,
ii) Ofenbacken, und/oder
iii) UV-Behandlung.

13. Verfahren nach Anspruch 12, wobei der erste Schritt des Bildens des Körpers (14) ausgewählt wird aus:
i) Formen in einem Formhohlraum,
ii) Spritzgießen, und
iii) Stösselschmieden eines Blocks in einem halb-geschmolzenen Zustand.

## Revendications

1. Cartouche (10) avec un remplissage (12) d'au moins une substance pour préparer un produit liquide au moyen de liquide et/ou de vapeur introduit dans la cartouche (10), la cartouche incluant un boîtier (14) contenant ledit remplissage (12) avec une paroi de fond (142) pour que ledit produit liquide s'écoule à partir de la cartouche (10), dans laquelle ladite paroi de fond (142) présente, lorsqu'elle est observée sur le côté externe par rapport à la cartouche (10) :
- une portion centrale (1420),
- une première cavité annulaire (1422) qui entoure la portion centrale (1420),
- une portion annulaire intermédiaire (1424) qui entoure la première cavité annulaire (1422) et est séparée de celle-ci par une première nervure annulaire (1423),
- une seconde cavité annulaire (1426) qui entoure la portion annulaire intermédiaire (1424) et est séparée de celle-ci par une seconde nervure annulaire (1425),
et dans laquelle ladite paroi de fond (142) présente des ouvertures d'écoulement à l'extérieur (1428) pour ledit produit liquide à partir de la cartouche (10).

2. Cartouche selon la revendication 1, dans laquelle lesdites ouvertures d'écoulement vers l'extérieur (1428) pour ledit produit liquide à partir de la cartouche (10) sont disposées dans au moins une de ladite portion centrale (1420), lesdites première (1422) et seconde (1426) cavités annulaires et ladite portion annulaire intermédiaire (1424), de préférence dans au moins une de ladite portion centrale (1420) et ladite portion intermédiaire (1424).

3. Cartouche selon la revendication 1 ou la revendication 2, incluant une feuille de matériau de filtre (18) appliquée sur la paroi de fond (142) de la cartouche (10) auxdites ouvertures d'écoulement vers l'extérieur (1428) pour le liquide, ledit matériau de filtre étant de préférence appliqué sur le côté interne de la paroi de fond (142) par rapport à la cartouche (10).

4. Cartouche selon l'une quelconque des revendications 1 à 3, dans laquelle ladite portion centrale (1420) est séparée de la première cavité annulaire (1422) par une troisième nervure annulaire (1430).

5. Cartouche selon l'une quelconque des revendications précédentes, dans laquelle ladite portion centrale (1420), lorsqu'elle est observée sur le côté de la paroi de fond (142) externe par rapport à la cartouche (10), est creusée.

6. Cartouche selon l'une quelconque des revendications 1 à 4 précédentes, dans laquelle ladite portion centrale (1420), lorsqu'elle est observée sur le côté de la paroi de fond (142) externe par rapport à la cartouche (10), est une protubérance et forme dans la cartouche (10) une chambre de réception respective pour ladite au moins une substance (12).

7. Cartouche selon l'une quelconque des revendications précédentes, dans laquelle ladite paroi de fond (142) présente une nervure en saillie périphérique (1432) formant, dans la cartouche (10), une chambre de réception annulaire pour ladite au moins une substance (12).

8. Cartouche selon la revendication 7, incluant des canaux d'écoulement (1434) pour ledit produit liquide fourni sur la surface interne de la paroi de fond (142) par rapport à la cartouche (10) à une position radialement interne par rapport à ladite chambre de réception annulaire.

9. Cartouche selon l'une quelconque des revendications précédentes, dans laquelle le boîtier (14) de la cartouche (10) et, de préférence, une feuille de scellement (16) pour sceller le boîtier de la cartouche (10) à l'extrémité du boîtier opposée à ladite paroi de fond (142), comprend un matériau compostable.

10. Cartouche selon la revendication 9, dans laquelle ledit matériau compostable est choisi parmi :
- poly(acide lactique) (PLA),
- poly-L-lactide (PLLA),
- poly-D-lactide (PDLA),
- combinaison stéréocomplexe de PDLA et PLLA,
- amidons de maïs,
- matériaux cellulosiques,
- formulations à base de PLA, PDLA et/ou PLLA en combinaison avec des charges minérales,
- formulations à base de PLA, PDLA et/ou PLLA en combinaison avec des charges minérales et des plastifiants,
- formulations à base de PLA, PDLA et/ou PLLA et cellulose,
- formulations à base d'amidons de maïs en combinaison avec des charges minérales,
- poly(succinate de butylène),
- poly(succinate de butylène) en combinaison avec des charges minérales,
- polymères produits par des microorganismes ou bactéries, tels que PHA (poly-hydroxy-alcanoates) et PHB (poly-hydroxy-butyrate),
- matériaux résultant de la combinaison de fibres végétales et d'amidons,
- matériaux résultant de la combinaison de biomasses végétales et d'amidons,
- matériaux résultant de la combinaison de fibres végétales et de PLA,
- matériaux résultant de la combinaison de biomasses végétales et de PLA, et
- combinaisons de ceux ci-dessus.

11. Cartouche selon l'une quelconque des revendications précédentes, incluant une feuille de scellement (16) pour sceller le boîtier de la cartouche (10) à l'extrémité du casier opposée à ladite paroi de fond (142), dans laquelle la feuille de scellement (16) est d'un type détachable.

12. Procédé de production du boîtier (14) de la cartouche (10) selon l'une quelconque des revendications précédentes, ledit procédé incluant :
- une première étape de formation dudit boîtier (14), et
- une seconde étape de post-traitement incluant un ou plusieurs de :
- i) maintien dans un moule fermé,
- ii) cuisson en four, et/ou
- iii) traitement aux UV.

13. Procédé selon la revendication 12, dans lequel ladite première étape de formation dudit corps (14) est choisie parmi :
- i) moulage dans une cavité de moulage,
- ii) moulage par injection, et
- iii) poinçonnage-forgeage d'un comprimé dans un état semi-fondu.
